Europäisches Patentamt

European Patent Office

Office européen des brevets

(19)

(11) **EP 0 885 480 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(21) Anmeldenummer: 97916325.0

(22) Anmeldetag: **04.03.1997**

(51) Int Cl.⁷: $H02M\ 3/335$

(86) Internationale Anmeldenummer:
**PCT/DE97/00413**

(87) Internationale Veröffentlichungsnummer:
**WO 97/33361 (12.09.1997 Gazette 1997/39)**

(54) **SCHALTUNGSANORDNUNG FÜR SCHALTNETZTEILE MIT MEHREREN LASTUNABHÄNGIGEN AUSGANGSSPANNUNGEN**

CIRCUIT ARRANGEMENT FOR SWITCHING NETWORK SECTIONS WITH SEVERAL LOAD-INDEPENDENT OUTPUT VOLTAGES

CIRCUIT POUR ALIMENTATION A DECOUPAGE PRESENTANT PLUSIEURS TENSIONS DE SORTIE INDEPENDANTES DE LA CHARGE

(84) Benannte Vertragsstaaten:
**DE FR GB IT SE**

(30) Priorität: **08.03.1996 DE 19609123**

(43) Veröffentlichungstag der Anmeldung:
**23.12.1998 Patentblatt 1998/52**

(73) Patentinhaber: **SIEMENS AKTIENGESELLSCHAFT**
**80333 München (DE)**

(72) Erfinder: **BITENC, Bostjan**
**D-82110 Germering (DE)**

(56) Entgegenhaltungen:
**EP-A- 0 329 841          EP-A- 0 499 024**
**GB-A- 2 228 152**

• **PATENT ABSTRACTS OF JAPAN vol. 6, no. 233 (P-156), 19.November 1982 & JP 57 134729 A (NIPPON DENKI), 20.August 1982,**

## Beschreibung

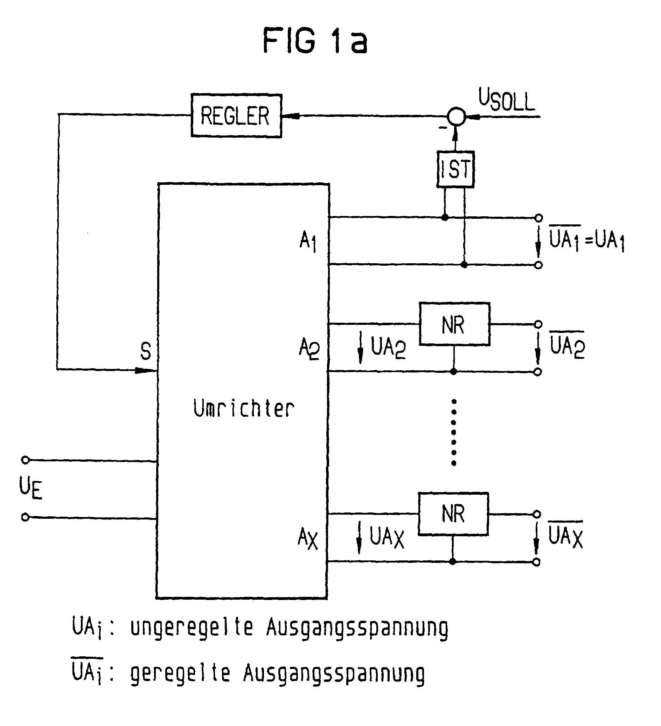

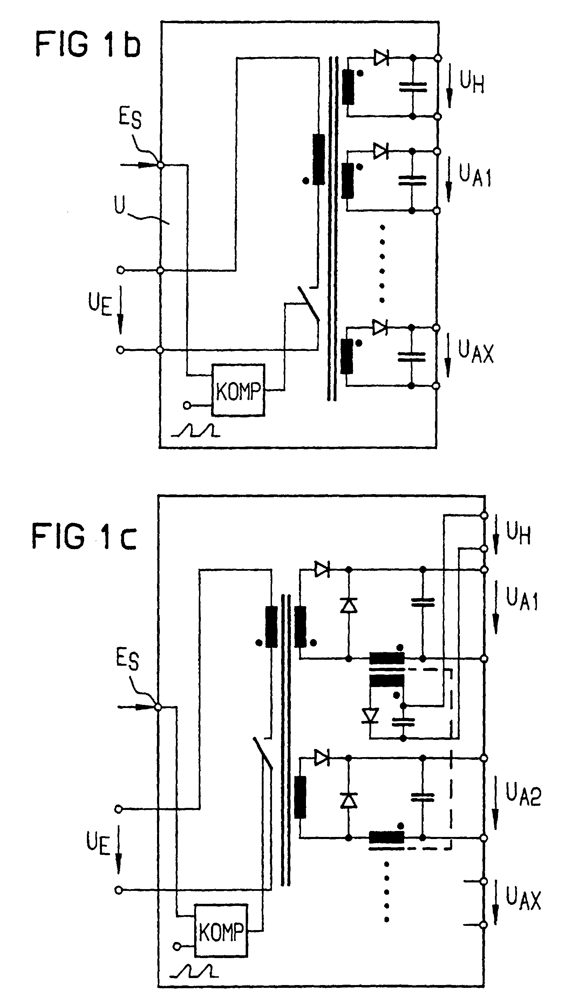

Schaltnetzteile mit mehreren Ausgangsspannungen werden vorzugsweise mittels Übertragern mit mehreren Ausgangswicklungen realisiert (ugl. EP-A-0 499 024). Bei einem solchen Schaltnetzteil wird eine erste Ausgangspotentialspannung $UA_1$ direkt über einen Umrichter geregelt. Die übrigen, an den Ausgängen des Umrichters abgreifbaren Ausgangsspannungen UA2,..., UAx werden jeweils indirekt durch Nachregeleinheiten an die Erfordernisse des, an den Ausgangsklemmen angeordneten Schaltkreises gesteuert. Diese Art von Schaltnetzteil bringt den Vorteil mit sich, daß eine Vielzahl von Ausgangsspannungen mit nur einem Umrichtersystem erzeugt werden können. Ein Nachteil dieser in Fig.1 abgebildeten Schaltungsanordnung besteht jedoch darin, daß die nachzuregelnde Ausgangsspannung UAx jeweils größer sein muß als die, an eine Last anzupassende Ausgangsspannung nach einer Nachregeleinheit NRx.

Diese Voraussetzung ist beispielsweise dann sehr schwer einzuhalten, wenn sich extreme Lastsituationen am direkt geregelten Kreis des Umrichters ergeben. Bei zu kleiner Last, insbesondere bei Leerlauf, am direkt geregelten Ausgangskreis (z.B. UA1), können die Sollpotentialspannungen an den übrigen Ausgangsklemmen des Umrichters für nachgeordnete Schaltkreise nicht vorgegeben werden.

Bisher war es üblich, daß dieser genannte Nachteil bei einem, wie oben beschriebenen Schaltnetzteil entweder:

- mit einer, in den direkt geregelten Kreis eingefügten Vorlast verhindert wird, daß die Ausgangsspannungen UAi (i=2,3,..) an den Anschlüssen des Umrichters nicht unter einem Sollpotential, im Schwachlastfall abfallen oder

- durch eine entsprechende Dimensionierung der Mehrwicklungsübertrager in dem Umrichter mit einer Erhöhung der Sekundärwindungszahlen dafür gesorgt wird, daß die Ausgangspotentialspannungen UAi, auch in extremen Lastfällen am direkt geregelten Kreis, genügend hoch sind.

Die erste, im vorigen Abschnitt genannte Schaltungsvariante bringt den Nachteil mit sich, daß eine in einem Vorlastwiderstand umgesetzte Leistung verloren geht. Der Wirkungsgrad bei schwacher Belastung des direkt geregelten Kreises verringert sich dadurch wesentlich.

Die zweite Schaltungsvariante bringt den Nachteil mit sich, daß eine erhöhte Ausgangsspannung an den Ausgangsklemmen des Umrichters immer an den Nachregeleinheiten anliegt, also auch dann, wenn der direkt geregelte Kreis nicht mit schwacher Last betrieben wird. Nachteil dieser Schaltungsausgestaltung ist, daß eine zunehmende Verschlechterung des Wirkungsgrades des Umrichters vor allem bei höherer Belastung des direkt geregelten Kreises eintritt.

Die oben aufgeführten Schaltungsvarianten wurden bisher zur Optimierung eines Schaltnetzteils so eingesetzt, daß die Verluste in den Nachregeleinheiten über einen ausgewählten Lastbereich minimal gehalten wurden.

Trotz dieser Optimierung ist bei manchen Anwendungsfällen weiter von Nachteil, daß die mögliche Ausgangsleistung aller durch Nachregeleinheiten geregelten Kreise dabei kleiner sein muß als die des direkt geregelten Kreises, wenn das Schaltnetzteil noch einen akzeptablen Wirkungsgrad erzielen soll.

In Fällen, in denen mehrere leistungsstarke Ausgangsspannungen benötigt werden, müssen auch mehrere Umrichtersystem eingesetzt werden.

Der Erfindung liegt die Aufgabe zugrunde, eine einfache Schaltungsanordnung anzugeben, bei der die oben aufgeführten Nachteile vermieden werden können.

Die Aufgabe wird durch die Merkmale des Patentanspruchs 1 gelöst.

Die Erfindung bringt neben dem Vorteil, daß die Ausgangsspannungen bei extremen Einstellbedingungen an den Anschlüssen der direkt geregelten Ausgangsspannung die spezifizierten Werte der weiteren Ausgangsspannungen beibehalten werden, den weiteren Vorteil mit sich, daß weniger Verluste als bei den beschriebenen Lösungsansätzen erzeugt werden und dadurch der Wirkungsgrad entscheidend verbessert ist.

Die Erfindung bringt den Vorteil mit sich, daß die Schaltungsanordnung so dimensioniert werden kann, daß die Ausgangsleistung der nachgeregelten Kreise höher ist als die des direkt geregelten Kreises. Dies bringt den weiteren Vorteil mit sich, daß weitere Umrichtersysteme innerhalb des Schaltnetzteils eingespart und daß dessen Herstellungskosten dadurch deutlich reduziert werden.

Eine weitere Ausgestaltung der Erfindung bringt den Vorteil mit sich, daß immer genügend Spannungspotential an den Ausgangsklemmen des Umrichters abgreifbar ist und daß von einem Lastwechsel am direkt geregelten Kreis die nachgeregelten Ausgangsspannungen UAi (1, 2,...,3) unabhängig sind.

Eine weitere Ausgestaltung der Erfindung bringt den Vorteil mit sich, daß insbesondere bei Leerlauf des direkt geregelten Ausgangskreises eine niederfrequente Oszillation der Ausgangsspannung am Umrichter nicht auftritt.

Vorteilhafte Weiterbildungen der Erfindung sind in den Unteransprüchen angegeben.

Weitere Besonderheiten der Erfindung werden aus der nachfolgenden näheren Erläuterung eines Ausführungsbeispiels anhand von schematischen Zeichnungen ersichtlich.

Es zeigen:

Figur 1a      ein Schaltnetzteil mit mehreren Ausgangsspannungen,

| Figur 1b,1c | Schaltungsausgestaltungen des Schaltnetzteils, |
| Figur 2 | eine Ausgestaltung eines direkt geregelten Kreises, |
| Figur 3 | eine schaltungstechnische Realisierung eines in dem direkt geregelten Kreises integrierten Moduls, |
| Figur 4 | eine schematische Darstellung eines weiteren Ausführungsbeispiels und |
| Figur 5 | eine schaltungstechnische Ausgestaltung des weiteren Ausführungsbeispiels. |

Umrichter mit mehreren Ausgangsspannungen werden vorzugsweise mittels Übertragern mit mehreren Ausgangswicklungen realisiert. Bei dieser Schaltungsart wird mindestens eine Ausgangsspannung direkt durch einen Rückkopplungskreis zwischen Ausgang und Eingang des Umrichters geregelt, während die übrigen, an den Ausgangsklemmen des Umrichters abgreifbaren Ausgangsspannungen zwar durch die Rückkopplung verändert, jedoch einzeln indirekt durch ein Nachregelelement einem Verbraucher bzw. einer Last angepaßt werden können.

Diese Schaltungsart bringt den Vorteil mit sich, daß eine Vielzahl von Ausgangsspannungen mit nur einem Umrichtersystem erzeugbar sind. Bei dem direkt rückgekoppelten Steuerkreis wird die Ausgangsspannung des Umrichters als Ist-Spannungspotential mit einem Soll-Spannungspotential verglichen und eine Spannungspotentialdifferenz über eine Regeleinheit dem Umrichter wieder als Stellgröße zugeführt. Die Ausgangsspannungen des Umrichters werden je nach Sollwertabweichung angehoben oder verringert.

Die in Figur 1 dargestellte Schaltungsanordnung gibt den Stand der Technik wieder und ist in der Beschreibungseinleitung bereits erwähnt worden. Bei dieser Schaltungsanordnung wird das, an einem ersten Ausgang AI des Umrichters U abgreifbare Spannungspotential UA1 zur Regelung des Umrichters U und damit auch zur Voreinstellung der weiteren an dem Ausgang A2,...,AX des Umrichters U anliegenden Ausgangsspannungen UA2 bis UAx verwendet. Zur besseren Anpassung an die jeweiligen Lastsituationen an den Anschlußklemmen A2 bis Ax des Umrichters U werden jeweils eine Nachregeleinheit NR zwischen der Ausgangsklemme A2 bis Ax des Umrichters U und den an diesen angeschlossenen Schaltkreisen zwischengeschaltet. Im direkt geregelten Steuerkreis wird ein Ist-Soll Spannungspotentialvergleich durchgeführt und die aus dem Vergleich resultierende Potentialdifferenz über eine Regeleinheit R, die insbesondere als Integrierer ausgebildet ist, dem Umrichter U als Stellpotentials S wieder zugeführt.

In Figur 1b ist ein Sperrwandler und in Figur 1c ist ein Durchflußumrichter wiedergegeben die im Umrichter U integriert sein können.

In Fig. 2 ist eine Regeleinheit R für den direkt geregelten Kreis dargestellt. Diese Regeleinheit R gliedert sich in die einzelnen Funktionseinheiten:

- wie die Sollwertbildungseinheit SW mit einer Strommeßeinheit S1 zur Vorgabe eines Spannungspotential-Differenzwertes UDIF,SOLL, eine Ansteuereinheit TA für das Stellelement T sowie
- ein am Stellelement T anliegendes Modul S2 zur Ermittlung der am Stellelement T anliegenden Differenzspannung UDIF.

Sowohl das eingangsseitige Anschlußklemmenpaar EN der Regeleinheit R als auch das Ausganganschlußklemmenpaar AN ist mit einem Kondensator Cp, bzw. Ca verbunden. Das Ausgangsspannungspotential UA1 der Regeleinheit R ist das Ist-Spannungspotential für die Stellspannung S des Umrichters U. Das an dem Ausgangskemmenpaar AN abgreifbare Spannungspotential wird an einem Summenpunkt SU von einem Sollspannungspotentialwert USOLL abgezogen. Die Differenz wird über eine Regler RE dem Umrichter wieder als Stellgröße S zugeführt. Als Regler RE kann ein Regler mit I-Anteil eingesetzt werden. Um die separat nachzulegenden Ausgangsspannungen UAx bei schwacher Last oder im Leerlauf am direkt geregelten Schaltkreises ausreichend mit einem Spannungspotential versorgen zu können, wird dieses angehoben.

Die Erhöhung der Ausgangsspannungen UA2,..,UAn an den Ausgangsklemmen A2,...An läßt sich dadurch erreichen, daß mit Hilfe eines Transistors T eine Differenzspannung

$$UDIF = UA1 - \overline{UA1}$$

im direkt geregelten Rückkopplungskreis aufgebaut wird. Da die Spannung $\overline{UA1}$ immer auf den gleichen Spannungswert geregelt wird, stellt sich das Spannungspotential an der Trafowicklung des Umrichters U bzw. am Pulskondensator Cp auf den Wert $\overline{UA1}$ + UDIF ein. Die Spannungspotentiale UAi (i=2,3...) an den weiteren Ausgängen des Umrichters U erhöht sich in etwa im selben Verhältnis wie die Ausgangsspannung UA1. Der Sollwert für UDIF,Soll wird abhängig vom Laststrom IA1 bestimmt

$$UDIF,SOLL = f (IA1)$$

und ist für größere IA1 gleich null. Die zusätzlichen Verluste (UDIF,SOLL * IA1) sind daher klein und im Leerlauf gleich null.

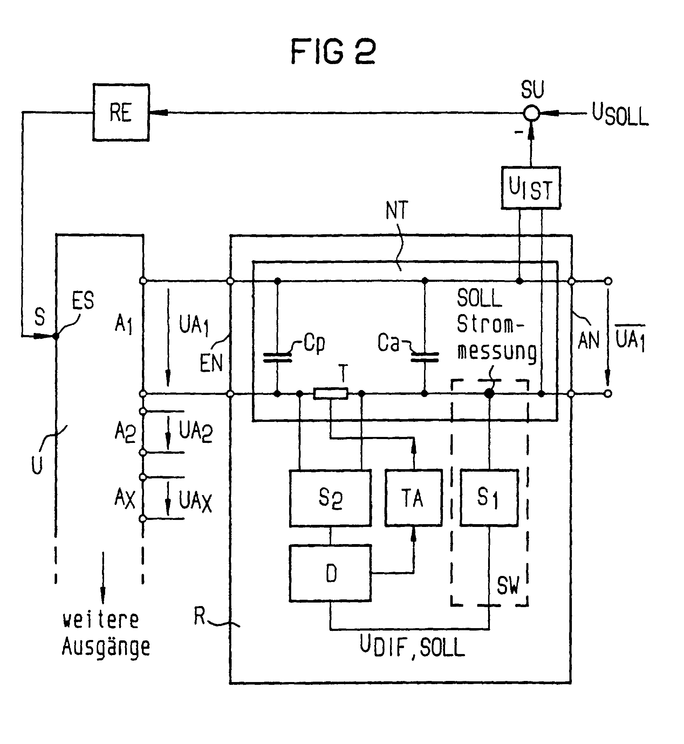

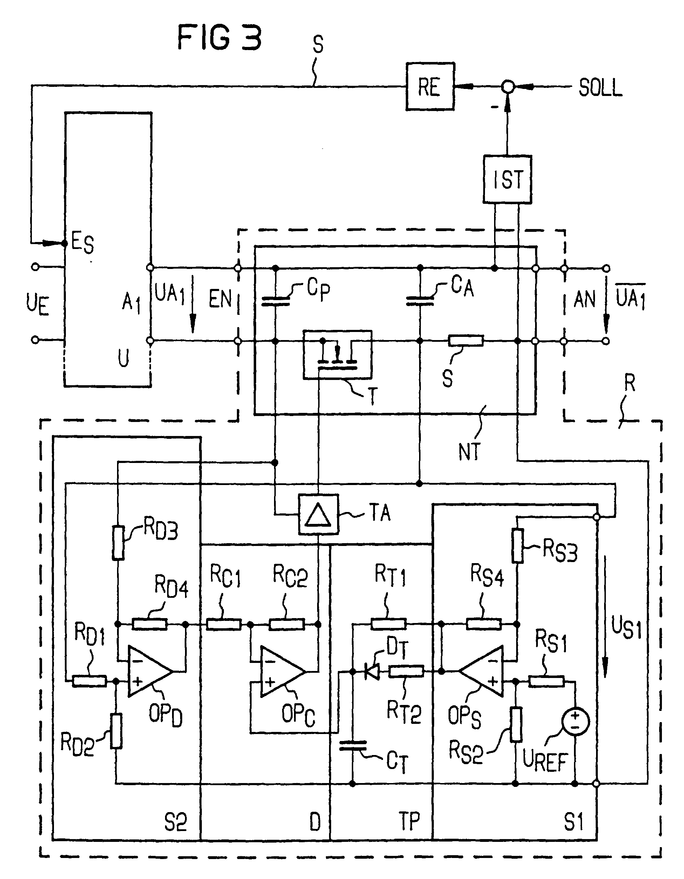

In Figur 3 ist eine schaltungstechnische Ausgestaltung der in Fig.2 schematisch dargestellten Schaltungsanordnung NR wiedergegeben.

Die Module S1, S2 weisen bei dieser Ausführung jeweils Verstärkerelemente OPS, OPD, das Modul D einen rückgekoppelten Operationsverstärker OPC auf. Das Modul NT ist im wesentlichen aus den, an dessen Eingängen angeordneten Kapazitäten CPLUS, CAUS sowie einem zwischen diesen Kapazitäten angeordneten steuerbaren Stellelement T gebildet.

Der Ausgangsstrom IA1 wird mittels eines am Ausgang des Moduls NT angeordneten Meßshunts S in ein äquivalentes Spannungspotential umgewandelt. Aus diesem Spannungspotential wird ein Spannungspotential-Sollwert für ein lastabhängiges Differenzspannungspotential UDIF,SOLL gebildet. Eine Möglichkeit dies zu erreichen ist durch nachfolgende stetige Funktion in der Form

$$UDIF,SOLL = UREF - US1$$

wiedergegeben. Dieser lineare Zusammenhang kann durch eine Subtrahierschaltung S1, gebildet aus den Widerständen RS1, RS2, RS3, RS4 sowie dem Operationsverstärker OPS erreicht werden.

Um Lastsprünge am Ausgang AN der Recheneinheit R besser überbrücken zu können, wird zwischen dem Modul S1 und einem Verstärkerelement R2 ein Tiefpaß TP integriert. Durch die Elemente RT1, RT2, DT und CT dieses Moduls TP werden zum einen ein Anstieg des Spannungspotentials bei einer sprunghaften Belastung an dem Ausgang An des Moduls NT unverzögert und zum anderen bei einer Entlastung an den Anschlußklemmen einen Spannungsabfall verzögert an nachgeordnete Schaltungselemente weitergegeben. Zur Messung von UDIF,SOLL ist eine zweite Subtrahierschaltung S2, gebildet aus den Widerständen RD1, RD2, RD3 und RD4 sowie dem Operationsverstärker OPD vorgesehen. Ein der zweiten Subtrahierschaltung nachgeschaltetes Modul D, gebildet aus den Widerständen RC1, RC2 und einen Operationsverstärker OPC. Als Regler kann neben beliebigen Reglertypen wie beispielsweise ein PID-Regler, vorzugsweise auch P-Regler verwendet werden (wie im Modul D dargestellt). Eine Ansteuerschaltung TA für das Stellelement T, beispielsweise einem MOSFET Transistor T, ist dann erforderlich, wenn die Ausgangsspannung des Operationsverstärkers OPC des Reglers D nicht groß genug ist. Die einfachste Realisierung dieser Ansteuereinheit ist ein Transistor in Emitterschaltung.

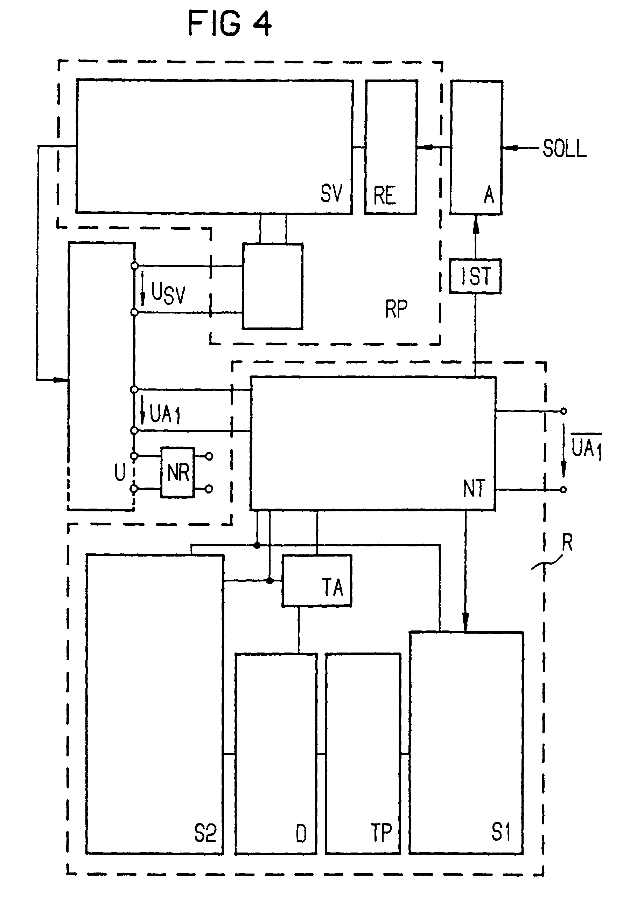

In der Figur 4 ist eine schematische Schaltungsanordnung eines Schaltnetzteils abgebildet, bei der die bereits beschriebene Regeleinheit R des Umrichters U wiedergegeben ist. Bei dieser Ausführungsform wird zusätzlich noch berücksichtigt, daß die Phase der Regelstrecke (Übertragungsfunktion (UA1/USMOD) auch bei niedrigen Erregungsfrequenzen genügend groß ist und daher keine niederfrequenten Oszillationen auftreten können. Erreicht wird dies durch Rückkoppeln von UA1 oder einer dazu proportionalen Spannung (z.B. USV an einer primärseitigen Hilfswicklung) auf das Stellsignal S.

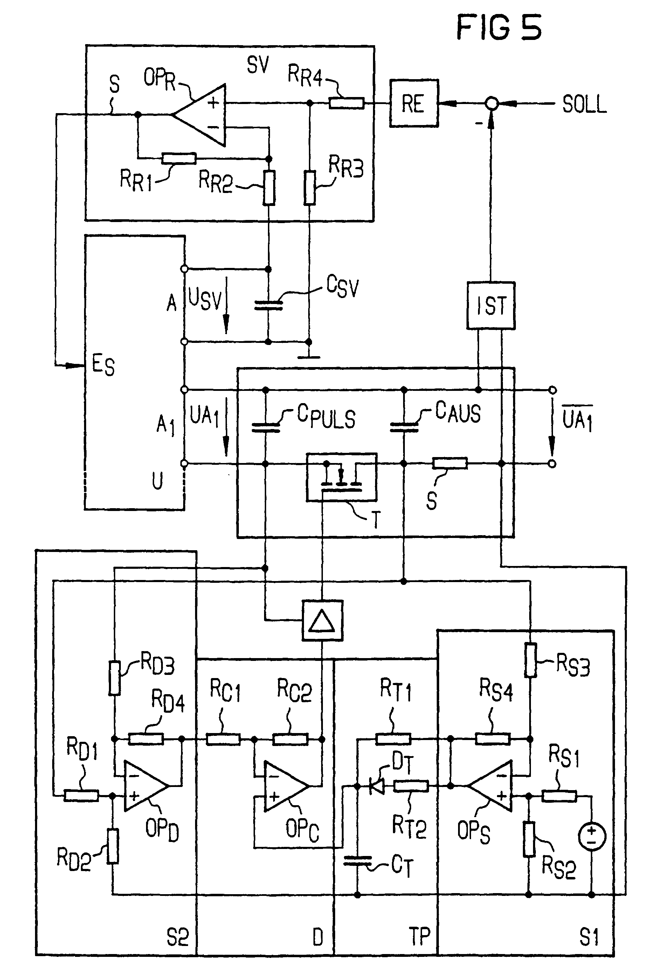

Diese Schalteinheit SV ist dann von besonderem Vorteil wenn an den Ausgangsklemmen AN des direkt geregelten Kreises eine geringe oder keine Last an den Ausgangsklemmen von R angeschlossen ist. Die Regeleinheit R ermöglicht, wie oben beschrieben, daß die weiteren Ausgangsspannungen UA2, ... , UAn des Umrichters U ausreichend mit einem Spannungspotential selbst bei Schwachlast am Ausgang des direkt geregelten Kreises mit einer ausreichenden Spannung versorgt werden können. Die schaltungstechnische Realisierung zur Erhöhung der Phasenreserve der Regelstrecke ist im oberen Teil der in Fig. 4 sowie in Fig. 5 dargestellten Schaltungsanordnung wiedergegeben.

In Figur 5 ist die schaltungstechnische Realisierung des Ausführungsbeispiels der in Fig. 4 dargestellten Schaltungsanordnung wiedergegeben. Ein Ist-Soll Spannungspotentialvergleich wird dabei zwischen der durch die Regeleinheit R nachgeregelten Ausgangsspannung, wie z.B. $\overline{UA1}$ des Umrichters U und einem Sollpotentialwert USO11 durchgeführt. Ein aus dem Ist-Soll Spannungspotentialvergleich resultierende Potentialspannung wird an einen Regler RE, der beispielsweise auch in diesem Ausführungsbeispiel einen I-Anteil besitzt, weitergeleitet. Die integrierte Vergleichsspannung wird über das weitere Modul SV wieder an den Eingang ES des Umrichters U als Stellgröße S angelegt. In dem Modul SV ist ein rückgekoppelter Operationsverstärker OPR angeordnet. Eine Spannungsversorgung des Operationsverstärkers OPR kann bei einem nicht galvanisch getrennten Aufbau des Umrichters U direkt von UA1 oder bei einer galvanischen Trennung zwischen Eingangs- und Ausgangsspannung innerhalb des Umrichters U am Ausgang A eine zu UA1, proportionale Spannung USV abgegriffen werden. Zur Glättung der Ausgangsspannung USV wird ein Kondensator CSV zwischen den Anschlußklemmen A eingefügt. Bei einer galvanischen Trennung innerhalb des Umrichters U ist beispielsweise eine Spannungspotentialversorgung des Moduls SV an einer primärseitigen Hilfswicklung des Umrichters U abgreifbar.

An dem im Modul SV angeordneten Operationsverstärker OPR ist ein erster Eingang über einen Widerstand RR3 an einem Massebezugspotential der Ausgangsklemmen A, des Umrichters U und über einen weiteren Widerstand RR4 mit dem Ausgang der Regelschaltung R verbunden. Der zweite Eingang des Operationsverstärkers OPR ist über einen Widerstand RR2 mit dem an der Ausgangsklemme A abgreifbaren Spannungspotential des Umrichters U verbunden. Das Stellsignal S, das am Ausgang des Moduls anliegt, wird an den Eingang Es des Umrichters U weitergeleitet.

Durch das Einbringen des Moduls SV wird dafür gesorgt, daß die Phase der Übertragungsfunktion UA1/USMOD immer genügend groß ist und somit niederfrequente Oszillationen nicht auftreten können.

**Patentansprüche**

1. Schaltungsanordnung mit mehreren Ausgangsgleichrichterschaltungen zur Regelung von mehreren Ausgangsspannungen eines Umrichters (U), von denen eine erste Ausgangsspannung (UA1) den Umrichter (U) durch ein erstes Ausgangssignal (S) steuert, und mindestens eine weitere Ausgangsspannung (UAx) durch jeweils ein Nachregelelement (NRn) konstant gehalten wird, **dadurch gekennzeichnet,**

   **daß** eine Regeleinheit (R) mit einem Stellelement (T) vorgesehen ist, die an der ersten Ausgangsgleichrichterschaltung angeschaltet ist und die erste Ausgangsspannung (UA1) regelt, **daß** in der Regeleinheit (R) ein erstes Modul (S1) zur Ermittlung eines ersten Spannungspotentials (UDIF,SOLL) an einem Meßshunt, der in Reihe zu dem Stellelement (T) angeordnet ist, und ein zweites Modul (S2) zur Ermittlung eines zweiten Spannungspotentials (UDIF) an dem Schaltelement (T) vorgesehen ist, **daß** der Ausgang des ersten Moduls (S1) mit einem ersten Eingang und der Ausgang des zweiten Moduls (S2) mit einem zweiten Eingang eines dritten Moduls (D) zur Differenzwertbildung verbunden ist und **daß** der Ausgang des dritten Moduls (D) mit dem Steuereingang des Stellelementes (T) verbunden ist.

2. Schaltungsanordnung nach Anspruch 1, **dadurch gekennzeichnet,** **daß** das erste und zweite Modul (S1, S2) eine Subtraktionsschaltung ist.

3. Schaltungsanordnung nach Anspruch 1, **dadurch gekennzeichnet,** **daß** das dritte Modul (D) ein PDI-Regler ist.

4. Schaltungsanordnung nach Anspruch 1, **dadurch gekennzeichnet,** **daß** das dritte Modul (D) ein P-Regler ist.

5. Schaltungsanordnung nach Anspruch 1, **dadurch gekennzeichnet,** **daß** das Stellelement (T) ein MOSFET-Transistor ist.

6. Schaltungsanordnung nach einem der vorhergehenden Ansprüche, **dadurch gekennzeichnet,** **daß** zwischen dem Ausgang des ersten Moduls (S1) und dem ersten Eingang des dritten Moduls (D) ein Tiefpaßfilter (TP) angeordnet ist.

7. Schaltungsanordnung nach einem der vorhergehenden Ansprüche, **dadurch gekennzeichnet,** **daß** zwischen einem Eingangsklemmenpaar (EN) der Regeleinheit (R) eine erste Kapazität (CPULS) und zwischen den Ausgang des Stellelementes (T) und einem Anschluß eines Ausgangsklemmenpaares (AN) der Regeleinheit (R) eine zweite Kapazität (T) angeordnet ist.

8. Schaltungsanordnung nach einem der vorhergehenden Ansprüche, **dadurch gekennzeichnet,** **daß** in dem das Regelsignal (S) für den Umrichter (U) bildenden Rückkoppelkreis eine Phasenregeleinheit (SV) angeordnet ist.

9. Schaltungsanordnung nach einem der vorhergehenden Ansprüche, **dadurch gekennzeichnet,** **daß** die Phasenregeleinheit (SV) mit einem Subtraktionsverstärker gebildet ist.

10. Schaltungsanordnung nach einem der vorhergehenden Ansprüche, **dadurch gekennzeichnet,** **daß** die Spannungsversorgung des Phasenregelelementes (SV) direkt am Umrichter (U) abgreifabar ist.

**Claims**

1. Circuit arrangement having a plurality of output rectifier circuits for regulating a plurality of output voltages of a converter (U), of which a first output voltage (UA1) controls the converter (U) by means of a first output signal (S), and at least one further output voltage (UAx) is kept constant by a respective readjusting element (NRn), **characterized**

   **in that** a regulating unit (R) with a control element (T) is provided which is connected to the first output rectifier circuit and regulates the first output voltage (UA1), **in that** the regulating unit (R) is provided with a first module (S1) for determining a first voltage potential (UDIF, DESIRED) across a measurement shunt, which is arranged in series with the control element (T), and with a second module (S2) for determining a second voltage potential (UDIF) across the switching element (T), **in that** the output of the first module (S1) is connected to a first input and the output of the second module (S2) is connected to a second input of a third module (D) for differential value formation, and **in that** the output of the third module (D) is connected to the control input of the control element (T).

**2.** Circuit arrangement according to Claim 1, **characterized in that** the first and second modules (S1, S2) are a subtraction circuit.

**3.** Circuit arrangement according to Claim 1, **characterized in that** the third module (D) is a PDI regulator.

**4.** Circuit arrangement according to Claim 1, **characterized in that** the third module (D) is a P. regulator.

**5.** Circuit arrangement according to Claim 1, **characterized in that** the control element (T) is a MOSFET transistor.

**6.** Circuit arrangement according to one of the preceding claims, **characterized in that** a low-pass filter (TP) is arranged between the output of the first module (S1) and the first input of the third module (D).

**7.** Circuit arrangement according to one of the preceding claims, **characterized in that** a first capacitor (CPULSE) is arranged between an input terminal pair (EN) of the regulating unit (R) and a second capacitor (T) is arranged between the output of the control element (T) and a terminal of an output terminal pair (AN) of the regulating unit (R).

**8.** circuit arrangement according to one of the preceding claims, **characterized in that** a phase regulating unit (SV) is arranged in the feedback circuit forming the regulating signal (S) for the converter (U).

**9.** Circuit arrangement according to one of the preceding claims, **characterized in that** the phase regulating unit (SV) is formed with a subtraction amplifier.

**10.** Circuit arrangement according to one of the preceding claims, **characterized in that** the voltage supply of the phase regulating element (SV) can be picked off directly at the converter (U)

## Revendications

**1.** Circuit avec plusieurs circuits redresseurs de sortie pour la régulation de plusieurs tensions de sortie d'un survolteur-dévolteur (U), parmi lesquelles une première tension de sortie (UA1) commande le survolteur-dévolteur (U) grâce à un premier signal de sortie (S) et, au moins, une autre tension de sortie (Uax) est maintenue constante par un élément respectif de post-régulation (NRn) **caractérisé par le fait**

> **qu'**il est prévu une unité de régulation (R) avec un élément de commande (T) qui est connectée au premier circuit redresseur de sortie et qui régule la première tension de sortie (UA1),
> **qu'**il est prévu, dans l'unité de régulation (R), un premier module (S1) pour la détermination d'un premier potentiel de tension (UDIF,SOLL) sur un shunt de mesure, qui est monté en série sur l'élément de commande (T), et un deuxième module (S2) pour la détermination d'un deuxième potentiel de tension (UDIF) sur l'élément de commutation (T),
> **que** la sortie du premier module (S1) est reliée à une première entrée et la sortie du deuxième module (S2), à une deuxième entrée d'un troisième module (D) pour former une valeur différentielle et
> **que** la sortie du troisième module (D) est reliée à l'entrée de commande de l'élément de commande (T).

**2.** Circuit selon revendication 1 **caractérisé par le fait que** le premier et le deuxième module (S1, S2) sont des circuits de soustraction..

**3.** Circuit selon la revendication 1 **caractérisé par le fait que** le troisième module (D) est un régulateur à triple action ou PID.

**4.** Circuit selon la revendication 1 **caractérisé par le fait que** le troisième module (D) est un régulateur proportionnel.

**5.** Circuit selon la revendication 1 **caractérisé par le fait que** l'élément de commande (T) est un transistor MOS à effet de champ ou MOSFET.

**6.** Circuit selon l'une des revendications précédentes **caractérisé par le fait qu'**un filtre passe-bas (TP) est disposé entre la sortie du premier module (S1) et la première entrée du troisième module (D).

**7.** Circuit selon l'une des revendications précédentes **caractérisé par le fait** qu'une première capacité (CPULS) est disposée entre une paire de bornes d'entrée (EN) de l'unité de régulation (R) et qu'une deuxième capacité (CAUS) est disposée entre la sortie de l'élément de commande (T) et un raccordement d'une paire de bornes de sortie (AN) de l'unité de régulation (R).

**8.** Circuit selon l'une des revendications précédentes **caractérisé par le fait** qu'une unité de régulation de phase (SV) est placée dans le circuit de contre-réaction qui génère le signal de régulation (S) pour le survolteur-dévolteur (U).

**9.** Circuit selon l'une des revendications précédentes **caractérisé par le fait** que l'unité de régulation de phase (SV) est formée par un amplificateur de soustraction.

**10.** Circuit selon l'une des revendications précédentes **caractérisé par le fait** que l'alimentation en tension de l'élément de régulation de phase (SV) peut être prélevée directement sur le survolteur-dévolteur (U).

# FIG 1a

UA$_i$: ungeregelte Ausgangsspannung

$\overline{UA_i}$: geregelte Ausgangsspannung

FIG 1b

FIG 1c

# FIG 2

# FIG 3

# FIG 4

# FIG 5